(19) Europäisches Patentamt
European Patent Office
Office européen des brevets

(11) **EP 1 966 856 B1**

(12) **FASCICULE DE BREVET EUROPEEN**

(45) Date de publication et mention de la délivrance du brevet:
**10.03.2010 Bulletin 2010/10**

(21) Numéro de dépôt: **06726322.8**

(22) Date de dépôt: **07.04.2006**

(51) Int Cl.:
**H01S 3/16** *(2006.01)*     **H01S 3/06** *(2006.01)*

(86) Numéro de dépôt international:
**PCT/FR2006/050316**

(87) Numéro de publication internationale:
**WO 2006/106276 (12.10.2006 Gazette 2006/41)**

(54) **DISPOSITIF A GUIDE OPTIQUE DESTINE A PRODUIRE UN SIGNAL OPTIQUE PAR POMPAGE OPTIQUE ET APPLICATIONS DE CE DISPOSITIF**

EINRICHTUNG MIT OPTISCHER FÜHRUNG ZUM ERZEUGEN EINES OPTISCHEN SIGNALS DURCH OPTISCHES PUMPEN UND ANWENDUNGEN DER EINRICHTUNG

DEVICE WITH OPTICAL GUIDE FOR PRODUCING AN OPTICAL SIGNAL BY OPTICAL PUMPING AND USES OF THE DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.04.2005  FR 0550900**

(43) Date de publication de la demande:
**10.09.2008 Bulletin 2008/37**

(73) Titulaires:
• **Fibercryst**
  **69001 Lyon (FR)**
• **Centre National de la Recherche Scientifique**
  **75794 Paris Cedex 16 (FR)**

(72) Inventeurs:
• **FOURMIGUE, Jean-Marie**
  **F-77590 Bois Le Roi (FR)**
• **PERRODIN, Didier**
  **F-69003 Lyon (FR)**
• **BALEMBOIS, François**
  **F-91870 Boissy Le Sec (FR)**
• **GEORGES, Patrick**
  **F-78590 Noisy Le Roi (FR)**
• **DIDIERJEAN, Julien**
  **F-91440 Bures Sur Yvette (FR)**

(74) Mandataire: **Catherine, Alain et al**
  **Cabinet Harlé & Phélip**
  **7 rue de Madrid**
  **75008 Paris (FR)**

(56) Documents cités:
• **DIGONNET M J F ET AL: "CLAD ND: YAG FIBERS FOR LASER APPLICATIONS" JOURNAL OF LIGHTWAVE TECHNOLOGY, IEEE SERVICE CENTER, NEW YORK, NY, US, vol. LT-5, no. 5, 1987, pages 642-646, XP000915539 ISSN: 0733-8724 cité dans la demande**
• **STONE J ET AL: "Nd:Y2O3 single-crystal fiber laser: room-temperature CW operation at 1.07- and 1.35-[mu]m wavelength" JOURNAL OF APPLIED PHYSICS USA, vol. 49, no. 4, avril 1978 (1978-04), pages 2281-2287, XP002357302 ISSN: 0021-8979 cité dans la demande**
• **DIGONNET M J F ET AL: "1.064- AND 1.32-MUM ND:YAG SINGLE CRYSTAL FIBER LASERS" JOURNAL OF LIGHTWAVE TECHNOLOGY, IEEE SERVICE CENTER, NEW YORK, NY, US, vol. LT-4, no. 4, avril 1986 (1986-04), pages 454-460, XP000711116 ISSN: 0733-8724 cité dans la demande**
• **LO C Y ET AL: "High-efficient Nd:YAG crystal fiber laser" CONFERENCE ON LASERS AND ELECTRO-OPTICS. (CLEO 2002). TECHNICAL DIGEST. POSTCONFERENCE EDITION. LONG BEACH, CA, MAY 19 - 24, 2002, TRENDS IN OPTICS AND PHOTONICS. (TOPS), WASHINGTON, WA : OSA, US, vol. VOL. 73, 19 mai 2002 (2002-05-19), pages 265-266, XP010606702 ISBN: 1-55752-706-7**

EP 1 966 856 B1

- QUE W ET AL: "MAGNESIUM-ION INDIFFUSION TO LITHIUM NIOBATE SINGLE-CRYSTAL FIBER WITH MGF2 AS DIFFUSION SOURCE" JAPANESE JOURNAL OF APPLIED PHYSICS, JAPAN SOCIETY OF APPLIED PHYSICS, TOKYO, JP, vol. 38, no. 9A, PART 1, septembre 1999 (1999-09), pages 5137-5142, XP000947532 ISSN: 0021-4922
- VATNIK S M: "Gain and laser operation of 1.11037:YAG crystal fibers" OPTICS COMMUNICATIONS, NORTH-HOLLAND PUBLISHING CO. AMSTERDAM, NL, vol. 197, no. 4-6, 1 octobre 2001 (2001-10-01), pages 375-378, XP004307813 ISSN: 0030-4018
- CHIA-YAO LO ET AL: "Efficient Nd:Y3Al5O12 crystal fiber laser" JAPANESE JOURNAL OF APPLIED PHYSICS, PART 2 (LETTERS) JAPAN SOC. APPL. PHYS JAPAN, vol. 41, no. 11A, 1 novembre 2002 (2002-11-01), pages L1228-L1231, XP002357303 ISSN: 0021-4922

**Description**

La présente invention concerne un dispositif à guide optique destiné à produire un signal optique par pompage optique d'un milieu amplificateur, elle permet la réalisation de lasers à puissance élevée et peut être appliquée à la réalisation de systèmes lasers ou amplificateurs optiques de divers types. Le dispositif de l'invention bien qu'il puisse être utilisé dans des lasers à émission continue permet également de réaliser des amplificateurs optiques ou des lasers impulsionnels.

Le principe de fonctionnement du laser est connu, il consiste, d'une manière générale, à transférer une énergie dite de pompe à un milieu matériel pour placer dans un état électronique excité des éléments de ce milieu, créant ainsi une inversion de population, éléments qui retourneront vers un état électronique de base en émettant ou amplifiant un rayonnement électromagnétique (faisceau signal) d'une manière cohérente par émission stimulée. Le faisceau signal a une longueur d'onde déterminée par la structure amplificatrice choisie : dans le cas d'un milieu solide, ce sont les niveaux d'énergie de l'ion dopant qui fixent la longueur d'onde d'émission (par exemple 1064 nm pour le YAG dopé Nd).

Toutefois, la conversion d'énergie n'est pas parfaite dans un laser. Lors de l'émission, la longueur d'onde d'émission est supérieure à celle ayant servit au pompage et une partie de l'énergie d'excitation du milieu n'est pas convertie en lumière et produit de la chaleur dans le milieu. Cela a pour conséquence de générer un échauffement du milieu pouvant provoquer des déformations du front d'onde du faisceau signal. La chaleur produite peut devenir telle qu'elle atteint le seuil d'endommagement et/ou de fracture du matériau. De plus, les milieux matériels ne sont pas optiquement parfaits et peuvent présenter des effets d'absorption, diffraction ou autres qui sont parfois non linéaires en fonction des énergies en jeu et qui compromettent la qualité du rayonnement émis.

Pour un milieu amplificateur laser, un paramètre clef est le gain pour un petit signal que l'on définit comme le rapport entre la puissance signal en sortie sur la puissance signal en entrée dans le cas où le signal est très faible par rapport à la puissance de saturation du milieu. Il peut être décrit par la formule simplifiée suivante :

$$G = \frac{\lambda}{h.c} \frac{\tau.\sigma.P_{pompe}}{S}$$

où $\lambda$ est la longueur d'onde, h la constante de Planck, $\tau$ le temps de vie du niveau haut de la transition laser, $\sigma$ la section efficace d'émission, S la section (surface) du faisceau et $P_{pompe}$ la puissance de pompe incidente. Pour avoir un gain important, il est donc souhaitable d'utiliser des matériaux qui ont notamment une section efficace élevée. C'est le cas en général des milieux cristallins qui ont des sections efficaces beaucoup plus importantes que les milieux vitreux pour un même ion dopant. Par exemple, la section efficace pour le Nd:YAG est environ 20 fois plus élevée que celle du Nd:verre. De plus les propriétés thermomécaniques des cristaux sont également plus favorables que celles des matrices vitreuses. Par exemple, la conductivité thermique du Nd:YAG est environ 13 fois plus grande que celle des fibres de silice.

L'invention propose d'utiliser des cristaux en tant que dispositif à guide optique. Dans la suite, on parlera de guide mono-cristallin. Pour le pompage, on utilise de préférence des diodes laser et on définit les faisceaux de pompage comme étant la lumière issue des diodes laser de pompe. Ces faisceaux sont en général très divergents et leur qualité spatiale est très éloignée d'un faisceau gaussien si bien qu'il est difficile de les focaliser dans un petit volume dans le cas d'une propagation libre. C'est pourquoi l'invention propose de guider les faisceaux de pompe dans le guide mono-cristallin.

Les guides de lumière mono-cristallins (parfois appelés fibres cristallines) ont déjà fait l'objet d'études dans notamment dans les articles suivant : J.Stone and C. A Burrus, "Nd : Y2O3 single crystal fiber laser : Room-temperature cw operation at 1.07- and 1.35-$\mu$m wavelength", Journal of Applied Phys. 49(4), April 1978; M.J.F. Digonnet, C.J. Gaeta, and H.J. Shaw, "1064- and 1,32-$\mu$m Nd : YAG Single Crystal FIber" Journal of Lightwave Technology, vol. LT-4, no. 4, april 1986; M.J.F. Digonnet, C.J. Gaeta, D. O'MEARA, and H.J. Shaw, "Clad Nd : YAG Fibers for Laser Applications", Journal of Lightwave Technology, vol. LT-5, no. 5, may 1987.

Grâce à la section efficace très élevée du guide proposé, les dimensions du faisceau signal se propageant dans le guide mono-cristallin vont être très différentes des dimensions classiques utilisées dans les fibres de silice. En effet, pour une valeur de gain fixée, les cristaux vont pouvoir utiliser des faisceaux de plus grande section que les fibres de silice. Par exemple, un guide mono-cristallin Nd:YAG produisant un faisceau signal laser de rayon $\omega$=200 $\mu$m (dans le plan du col du faisceau ou "waist") avec une puissance de pompe de 100 W absorbée, permet d'obtenir un gain petit signal de l'ordre de 40 (alors que dans une fibre de silice dopée au Nd, le diamètre n'est que de 40$\mu$m pour un gain de 40). De plus, l'absorption à la longueur d'onde de pompe est plus forte dans les cristaux, ce qui permet d'utiliser des guides monocristallins de longueur plus faible que les fibres optiques pour une même concentration en ion dopant. Si on suppose que le signal n'est pas guidé dans le guide mono-cristallin, sa longueur de Rayleigh L (dont la formule est L= $\pi\omega^2/\lambda$, $\lambda$ étant la longueur d'onde du signal et n l'indice du milieu) vaut environ 20 cm pour un signal à 1064 nm. On peut donc utiliser des guides ayant une longueur d'une dizaine de centimètres sans que le faisceau signal ne change de taille de manière significative. Cette longueur est suffisante pour absorber le faisceau de pompe tout en évitant un échauffement important du fait de la répartition de la puissance dans le guide. L'échauffement est également limité du fait de la conductivité thermique élevée des guides mono-cristallins comparés aux fibres classiques.

La grande section du faisceau du signal optique et la faible longueur du milieu amplificateur dans un tel guide optique, comparées aux fibres laser classiques, permettent également de réduire très fortement les effets non linéaires qui peuvent apparaître dans le matériau. Les dimensions des guides mono-cristallins sont donc très favorables à l'utilisation de signaux de forte puissance crête.

Ainsi, la présente invention propose un dispositif à guide optique allongé et moyen de pompage, destiné à produire par émission stimulée un signal optique sous l'effet d'un pompage optique par une onde de pompe, l'émission stimulée provenant d'éléments actifs du guide ayant été excités par l'onde de pompe.

Selon l'invention, le dispositif comporte un guide mono-cristallin à coeur dopé d'éléments actifs et à gaine périphérique non dopée permettant le guidage et le confinement de l'onde de pompe dans l'ensemble de son volume, le signal optique produit dans le coeur étant en propagation libre non guidé, les indices optiques du coeur et de la gaine du guide étant les plus proches possibles.

En pratique « les plus proches possibles » signifie que l'on recherche à ce que les indices optiques du coeur et de la gaine du guide soient sensiblement identiques mais bien que le matériau de base (le cristal) soit le même pour le coeur et la gaine, le fait de doper le coeur d'éléments actifs peut entraîner une modification de l'indice du coeur par rapport à celui de la gaine, modification d'indice que l'on souhaite faible afin que les conditions de propagation du signal et de l'onde de pompe ne soit sensiblement pas perturbé à l'interface entre le coeur et la gaine. Ainsi, les indices de réfraction du coeur et de la gaine du guide étant suffisamment proches, on évite un guidage de la lumière dans la partie dopée et des déformations importantes du front d'onde du faisceau signal. Par exemple, sur un guide mono-cristallin d'une longueur de 10 cm, la différence d'indice entre la partie dopée et la partie non dopée est typiquement inférieure à $10^{-5}$ pour éviter une déformation du front d'onde supérieure à $\lambda$ (ici $\lambda=1064$ nm, longueur d'onde d'émission du Nd :YAG).

Dans divers modes de mise en oeuvre de l'invention, les moyens suivants pouvant être utilisés seuls ou selon toutes les combinaisons techniquement envisageables, sont employés :

- le guide optique est un guide droit,
- la section du guide droit peut avoir diverses formes choisies parmi notamment les formes circulaire, circulaire tronquée, hexagonale, rectangulaire, triangulaire...
- le pompage optique est longitudinal,

- le pompage est latéral,
- le pompage optique latéral est quasi-longitudinal,
- le pompage optique latéral est radial (= transverse, c'est-à-dire perpendiculairement au grand axe du guide),
- le guidage et le confinement de l'onde de pompe sont obtenus par mise du guide dans un milieu d'indice de réfraction plus faible que celui du mono-cristal,
- le milieu d'indice de réfraction plus faible que celui du mono-cristal comporte essentiellement de l'air,
- le milieu d'indice de réfraction plus faible que celui du mono-cristal est composé d'une substance d'indice de réfraction inférieur à celui du monocristal,
- le coeur du guide permet une conversion de l'onde de pompe en signal optique selon un processus à quatre niveaux ou à trois niveaux ou quasi trois niveaux,
- le guide a une plus grande dimension de section comprise entre 0,4mm et 2mm, le coeur dopé ayant un diamètre compris entre 0,1mm et 1mm,
- le guide a une longueur inférieure à la longueur de Rayleigh du signal optique dans le guide,
- la longueur du guide est, de préférence, inférieure à la moitié de la longueur de Rayleigh,
- la longueur de Rayleigh L est donnée par : $L = \pi\omega^2/\lambda$ où $\lambda$ est la longueur d'onde du faisceau laser amplifié dans le guide mono-cristallin, $\omega$ est la taille (ou « waist ») du faisceau signal dans le plan du col du faisceau dans l'espace que constitue le milieu cristallin et n est l'indice du milieu cristallin,
- le guide a une longueur inférieure à 20cm,
- le guide a une longueur approximative de 10 cm,
- le matériau du cristal est choisi parmi un des composés mono-cristallin utilisables dans un laser,
- le matériau du cristal est choisi parmi les cristaux laser fluorés, les oxydes, les sequioxydes, les silicates, les borates, les apatites, les grenats, les niobates compatibles avec le/les éléments actifs,
- les éléments actifs sont choisis isolément ou en combinaisons parmi les dopants compatibles avec le mono-cristal et permettant l'émission stimulée,
- les éléments actifs sont choisis parmi les terres rares (notamment Nd, Yb, Pr, Ce, Tb, Dy, Ho, Er, Tm, Sm) et/ou les ions métalliques (notamment Ti, Cr, Zn) Yb, Er, Nd, Ti, Cr, Ho, Tm) isolément ou en combinaisons,
- le pompage du guide est transversal, la lumière de pompe étant absorbée dans une direction perpendiculaire à la direction de propagation du faisceau signal dans le guide mono-cristallin.
- le pompage du guide est latéral, l'onde de pompe atteignant la surface latérale du guide selon un angle d'incidence tel que ladite onde de pompe reste essentiellement confinée à l'intérieur dudit guide,
- le pompage du guide est quasi-longitudinal par au moins une onde de pompe provenant d'une direction différente mais proche de la direction du faisceau signal,

- le pompage du guide quasi-longitudinal est effectué par l'intermédiaire d'au moins un élément adaptateur à type de prisme,
- le pompage du guide est quasi-longitudinal par au moins une onde de pompe, l'onde de pompe traversant un prisme de couplage avant d'atteindre le guide par une face latérale,
- l'onde de pompe est produite par au moins une diode laser,
- le pompage du guide est longitudinal par au moins une onde de pompe, l'onde de pompe traversant un miroir dichroïque avant d'atteindre le guide par une de ses deux extrémités, le miroir dichroïque étant passant pour l'onde de pompe et réfléchissant pour le signal,
- le miroir dichroïque est perpendiculaire à l'axe optique défini par le guide,
- le miroir dichroïque est incliné par rapport à l'axe optique défini par le guide,
- le miroir dichroïque est contre l'extrémité du guide,
- le miroir dichroïque est à distance de l'extrémité du guide.
- le guide est pompé par une seule de ses deux extrémités,
- le guide est pompé par ses deux extrémités, au moins un des deux miroirs dichroïques étant incliné par rapport à l'axe optique défini par le guide pour extraction du signal,
- le guide est pompé par ses deux extrémités, un premier des deux miroirs dichroïques étant perpendiculaire à l'axe optique défini par le guide et le second étant incliné par rapport à l'axe optique défini par le guide pour extraction du signal,
- le guide est pompé par ses deux extrémités et les deux miroirs dichroïques ne sont pas perpendiculaires à l'axe optique défini par le guide.

L'invention concerne également une application du dispositif selon l'une ou plusieurs quelconque(s) des caractéristiques précédentes à la réalisation d'un amplificateur optique impulsionnel dans lequel sont injectées des impulsions optiques par une première extrémité du guide opposée à sa seconde extrémité qui sert au pompage optique, les impulsions optiques à amplifier issues d'un laser déclenché ou d'un laser à modes verrouillés en phase faisant un double passage dans le guide, un miroir réfléchissant à la longueur d'onde des impulsions et transparent à la longueur d'onde de pompe étant placé à la seconde l'extrémité et un isolateur/extracteur étant disposé à la première extrémité afin de faire suivre un chemin optique différent au signal optique formé d'impulsions amplifiées par rapport aux impulsions issues du laser déclenché ou à modes verrouillés.

Dans une première variante de cet amplificateur optique impulsionnel, on pompe en outre le guide par sa première extrémité. Dans une seconde variante de cet amplificateur optique, l'impulsion ne fait qu'un passage dans le guide, ce qui évite la mise en oeuvre d'un isolateur/extracteur.

L'invention concerne enfin une application du dispositif selon l'une ou plusieurs quelconque(s) des caractéristiques précédentes à la réalisation d'un oscillateur laser comportant un guide cristallin insérée dans une cavité optique linéaire (dans laquelle la lumière fait un aller et retour) ou en anneau (dans laquelle la lumière fait des tours) et comportant un miroir de sortie partiellement réfléchissant pour le signal, distinct du/des miroirs dichroïques, et permettant d'extraire une partie du signal produit. Un mode de réalisation de cavité linéaire met en oeuvre un pompage à une première extrémité du guide avec un miroir dichroïque pour le pompage, et à sa seconde extrémité un miroir de sortie partiellement réfléchissant permettant d'extraire hors de l'oscillateur laser une partie du signal produit. Dans une variante de la réalisation de la cavité linéaire, le guide est pompé à ses deux extrémités, un premier des deux miroirs dichroïques étant perpendiculaire à l'axe optique défini par le guide et le second étant incliné par rapport à l'axe optique défini par le guide pour renvoi du signal vers le miroir de sortie.

Dans le dispositif à guide mono-cristallin de l'invention, le guidage du rayonnement de l'onde de pompe permet d'exploiter plusieurs propriétés intéressantes. En général, il est très difficile de maintenir une densité de puissance de pompe élevée sur un volume important dans le cas d'une propagation libre de l'onde de pompe. Si la propagation de l'onde de pompe est guidée, en revanche, l'onde de pompe reste confinée et la densité de puissance reste élevée sur une grande longueur de propagation dans le guide. Ce premier avantage permet un meilleur recouvrement entre faisceau de l'onde de pompe et faisceau signal produit par le guide que dans le cas des matériaux massifs.

Le guidage de l'onde de pompe permet également l'utilisation de milieux amplificateurs plus longs que dans le cas des matériaux massifs qui ont au plus quelques centimètres de longueur. Cette configuration limite fortement l'échauffement local du milieu laser car la puissance de pompe est beaucoup mieux répartie. Cette propriété est très favorable pour limiter les effets thermiques qui apparaissent généralement dans les lasers utilisant des matériaux massifs dans lesquels se produisent des modifications des propriétés spectroscopiques et thermomécaniques du milieu laser affecté pour des températures élevées. Elle permet également d'utiliser des matériaux moins dopés et ainsi de limiter les effets spectroscopiques parasites tels que l'effet Auger (« up conversion ») ou l'extinction de fluorescence par concentration.

Dans des variantes des applications précédentes, le pompage peut être quasi-longitudinal à la place de longitudinal ou un pompage quasi-longitudinal peut être associé à un pompage longitudinal.

Dans le dispositif à guide de l'invention, le signal produit n'est par contre pas guidé et se propage au travers du guide mono-cristallin comme dans un cristal massif. Sa propagation n'impose pas de contrainte particulière à la géométrie du guide mono-cristallin comme c'est le cas pour les fibres de puissance à large mode (structure de fibre très spécifique, fibre enroulée pour sélectionner uniquement le mode fondamental de propagation en introduisant des pertes sur les modes d'ordre supérieur...). La taille du mode dans le guide mono-cristallin est imposée par des optiques situées avant le guide ou par de la géométrie du résonateur laser si le guide est insérée dans une cavité optique. Le mode peut donc être TEM00 sans aucune difficulté particulière, d'autant plus qu'il ne subit aucune déformation particulière au passage dans le guide mono-cristallin dont l'élévation de température et les contraintes sont très faibles.

La présente invention va maintenant être exemplifiée sans pour autant en être limitée avec la description qui suit en relation avec les figures suivantes:

la Figure 1 qui représente schématiquement un guide mono-cristallin produisant un signal optique longitudinal résultant d'un pompage longitudinal par une onde de pompe,

la Figure 2 qui représente schématiquement une partie d'une application du dispositif à guide mono-cristallin de l'invention,

la Figure 3 qui représente une application du dispositif à guide mono-cristallin de l'invention à un amplificateur optique d'impulsions,

la Figure 4 qui représente une application du dispositif avec pompage aux deux extrémités du guide,

la Figure 5 présente le cas d'un pompage "quasi-longitudinal" qui tire partie de la grande dimension du guide mono-cristallin pour effectuer un couplage du faisceau de pompe au moyen de prismes,

la figure 6 présente une vus en coupe transversale de l'installation de la figure 5, et

la figure 7 représente un mode de réalisation particulier de l'installation de la figure 5.

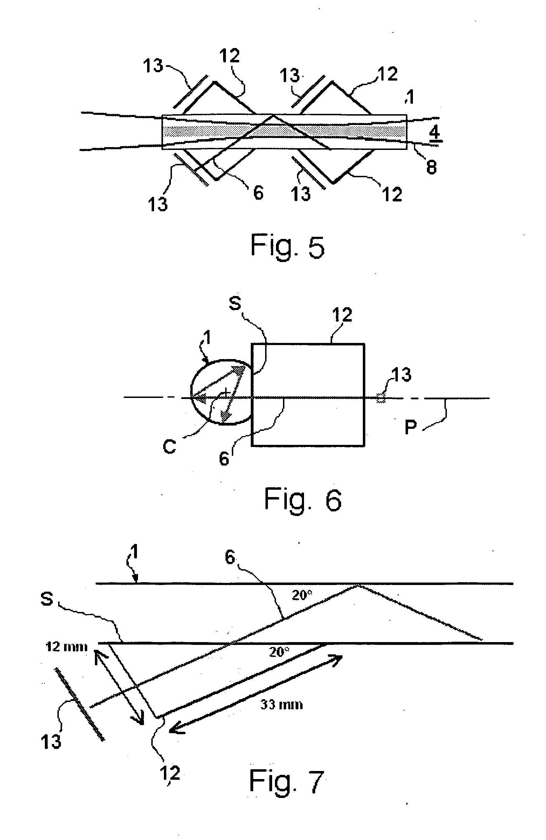

Dans les principaux exemples donnés ici, le pompage est longitudinal par diode laser, ce qui est actuellement le plus efficace en terme de rendement électrique-optique. Il est cependant possible de réaliser un pompage latéral : radial (transverse) ou quasi-longitudinal par impulsions lumineuses type flash ou par des diodes laser. Il est ainsi possible de réaliser un pompage quasi-longitudinal tel que le faisceau de pompe est couplé dans le guide mono-cristallin au moyen d'un prisme de couplage (figures 5 à 7).

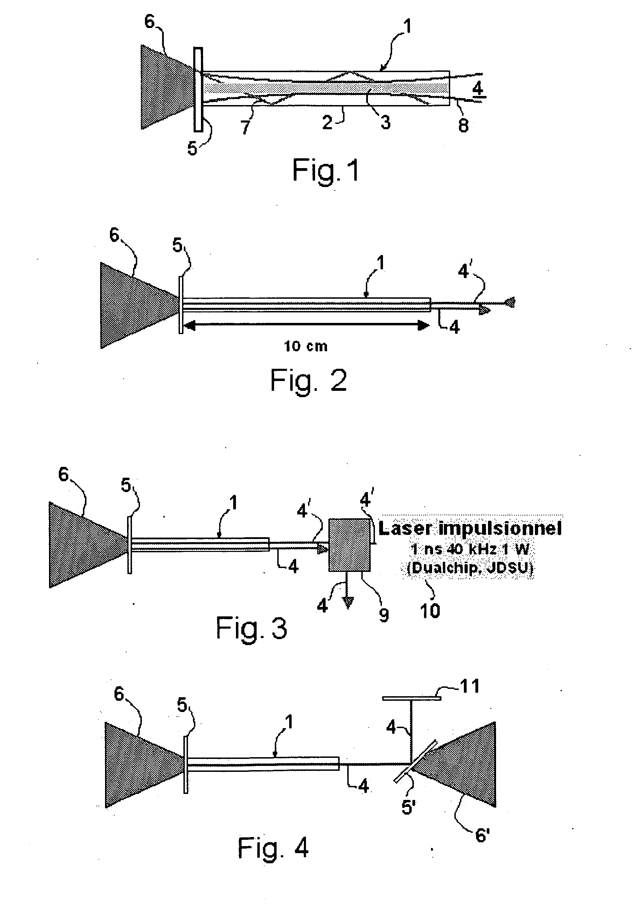

Sur la Figure 1, le guide mono-cristallin 1 allongé comporte une partie centrale 3 ou coeur qui est dopé avec des éléments permettant la conversion de l'onde de pompe 6 en un signal optique, et une partie périphérique 2 ou gaine qui, elle, n'est pas dopée. Le pompage du guide mono-cristallin reste très simple car il s'agit d'un pompage longitudinal au travers d'un miroir dichroïque 5 réfléchissant le signal optique 4 et transmettant le faisceau de l'onde de pompe 6. L'onde de pompe 6 est guidée, confinée, à l'intérieur du guide et on a représenté cet effet sous la forme d'un faisceau lumineux 7 d'onde de pompe qui est renvoyé vers l'intérieur du guide lorsqu'il atteint la paroi extérieure de la gaine du guide. De cette manière l'onde de pompe va être amenée à traverser le coeur du guide où elle pourra agir sur les éléments dopants pour les exciter. Par contre, le signal optique 4 produit n'est pas guidé et est soumis dans le milieu à divers effets optiques qui l'amène notamment à diverger selon la loi de la diffraction, ce qui a été représenté par les bords 8 divergents du faisceau du signal optique 4.

Les caractéristiques du guide et notamment sa longueur font que la divergence ne permet pas aux bords du faisceau du signal optique 4 d'atteindre les bords périphériques radiaux du guide 1, ce que l'on exprime par le fait que la longueur du guide est inférieure à la longueur de Rayleigh. En d'autres termes, dans le guide mono-cristallin, le coeur 3 dopé est gainé par une partie extérieure 2, périphérique, non dopée, le faisceau du signal optique 4 ayant au moins dans une partie de son trajet une section plus importante que celle de la partie dopée 3 mais qui reste toujours plus faible que celle de la partie non dopée 2. Dans ce cas, la pompe n'étant absorbée que dans la partie dopée, tous les atomes excités du milieu peuvent être utilisés par le faisceau du signal optique 4 et ce dernier ne subit aucune perte par diffraction sur les bords du guide mono-cristallin 1.

Le faisceau du signal optique 4 produit est donc plus large que le coeur 3 du guide. L'utilisation d'un faisceau signal de surface importante dans un milieu de longueur limitée va permettre de travailler avec des fortes puissances crêtes beaucoup plus facilement que dans les fibres à large mode qui sont bien plus longues, de l'ordre de quelques mètres à quelques dizaines de mètres. Cet avantage peut être combiné avec le bon recouvrement entre la pompe et le signal ainsi qu'avec une faible influence des effets thermiques. Il est donc possible de réaliser des systèmes de forte puissance moyenne. On a ainsi pu effectuer une simulation thermique avec un guide mono-cristallin de Nd:YAG dopé à 0,1% et de 10 cm de longueur, pompé avec une puissance de pompe incidente de 1 kW. La température ne s'élève alors que de 50 K et on constate alors que les effets thermiques induits restent relativement faibles à un tel niveau d'échauffement.

Cette propriété est importante pour réaliser des lasers à quasi-trois niveaux efficaces et de forte puissance. En effet, dans le cas de milieux lasers dont le niveau du bas est peuplé thermiquement : Lasers Yb, laser Nd à 946 nm (Nd:YAG) ou à 914 nm (Nd:YVO$_4$), l'efficacité décroît fortement avec la température et il est relativement difficile de réaliser un laser de forte puissance. Le guide mono-cristallin de l'invention apporte une solution simple à ce type de problème car l'échauffement y est fortement limité tout en maintenant une densité de puissance de pompe importante grâce à son guidage. Dans un mode de réalisation de l'invention, le guide met en oeuvre des éléments dopants permettant ce type de conversion.

Il en est de même pour les lasers à trois niveaux. En effet, les lasers à trois niveaux, comme par exemple les lasers Yb fonctionnant à 980 nm, nécessitent de fortes densités de puissance de pompe pour assurer une inversion de population suffisante. Ils fonctionnent en général avec des milieux fibrés (cas de l'Yb ou de l'Er) ou avec des pompages impulsionnels intenses. Les guides mono-cristallins pompés par diodes peuvent être utilisées avantageusement dans ce cas grâce au bon confinement de la puissance de pompe, par rapport aux milieux massifs. Dans un mode de réalisation de l'invention, le guide met en oeuvre des éléments dopants permettant ce type de conversion.

Le dispositif à guide de l'invention permet également une plus grande tolérance sur la longueur d'onde de l'onde de pompe. En effet, les milieux cristallins dopés par des ions terre rare ont souvent des raies d'absorption étroites, de quelques nanomètres de largueur. Ceci peut représenter un problème pour un pompage dont la longueur d'onde doit être précisément contrôlée afin de rester calée sur le pic d'absorption. Dans le cas d'un laser à quatre niveaux, un guide mono-cristallin suffisamment long, typiquement dix fois plus long qu'un milieu massif, peut apporter la solution à ce problème en permettant une absorption importante de la pompe même pour des longueurs d'onde décalées par rapport au maximum. Dans un mode de réalisation de l'invention, le guide met en oeuvre des éléments dopants permettant ce type de conversion.

Dans des applications typiques du dispositif de l'invention à guide mono-cristallin, on met en oeuvre le montage représenté à la Figure 2 qui ne représente donc que la partie commune de ces applications. Le guide a une longueur approximative de 10cm. Le miroir dichroïque 5 laisse passer l'onde de pompe et réfléchit au moins le signal optique produit par le guide. Selon l'application, la lumière 4' entrant dans le guide 1 peut être le signal optique 4 renvoyé en partie par un miroir non représenté et formant une face de sortie d'un laser dont les deux miroirs, le dichroïque 5 et celui de la face de sortie laser, forment une cavité accordée. Dans un autre cas, comme on le verra sur la Figure suivante, la lumière 4' peut être un signal issu d'un autre laser à amplifier dans une application à l'amplification d'impulsions lumineuses.

La Figure 3 est un montage permettant d'amplifier une impulsion lumineuse 4' de forte puissance crête issue d'un laser 10 impulsionnel jusqu'à une puissance moyenne importante. Le faisceau du signal optique 4 effectue deux passages (un aller et un retour) dans le guide mono-cristallin avant d'être éjecté par un isolateur optique 9. Le miroir dichroïque 5 de pompe laisse passer l'onde de pompe 6 à 808nm et réfléchit le signal optique produit par le guide à 1064nm. Le guide 1, monocristal Nd:YAG dopé à 0,1%, mesure environ 10cm de longueur et a un coeur de diamètre approximatif de 400$\mu$m. Pour un pompage diode fibrée de 30W à 808nm, on obtient un signal amplifié de 2 à 5W environ et une puissance crête supérieure à 100KW, la durée des impulsions étant de 1 ns et la cadence de 40 kHz.

Sur la Figure 4, un guide 1 est pompé à ses deux extrémités par deux ondes de pompe 6 et 6'. A une première extrémité, côté gauche de la Figure 4, l'onde de pompe 6 traverse un miroir dichroïque 5 perpendiculaire à l'axe optique défini par le guide 1, ce miroir dichroïque 5 renvoyant dans le guide le signal produit. À la seconde extrémité du guide, coté droit, l'onde de pompe 6' traverse le miroir dichroïque 5' pour atteindre le guide 1 et ce miroir dichroïque est incliné pour renvoyer latéralement le signal produit 4 vers un miroir de sortie 11 partiellement réfléchissant du signal 4 qui permet d'extraire du dispositif une partie du signal 4, l'autre partie du signal 4, non extraite, étant renvoyée dans le guide 1. Les extrémités de la cavité optique sont le miroir dichroïque 5 et le miroir de sortie 11.

Sur la figure 5, le guide est pompé par une ou plusieurs diodes laser sous forme de barrettes 13 émettant chacune une onde de pompe 6. Des prismes de couplage 12 permettent d'injecter les faisceaux de pompe 6 dans le guide 1 sans avoir besoin de miroirs dichroïques.

La dimension allongée du guide mono-cristallin permet de mettre un nombre important de prismes de couplage le long du dispositif et donc de multiplier les sources de pompage. La distance entre deux prismes de couplage doit alors être calculée afin que les faisceaux de pompe soient absorbés avant d'atteindre le prisme de couplage suivant. Il permet également de réduire considérablement la densité de puissance sur les surfaces d'injection comparé au pompage par les extrémités du guide. Ce point est une clef pour un pompage de forte puissance.

Cette configuration permet également d'utiliser facilement des barrettes de diode laser sans nécessité de mise en forme du faisceau comme c'est le cas pour un pompage par les extrémités : les barrettes de diode laser ont en effet une géométrie très allongée (10 mm sur 1$\mu$m pour la zone émettrice globale) bien adaptée au couplage par prisme sur le côté du guide.

Comme cela est représenté sur la figure 6, qui est une coupe transversale du montage de la figure 5, la face de contact S entre le guide 1 et chacun des prismes 12 est plane afin de permettre un bon couplage de la lumière de l'onde de pompe. Avantageusement le prisme de couplage 12 est en contact optique avec le guide 1 par l'intermédiaire d'un liquide d'indice défini permettant une adaptation de la transmission optique du prisme 12 vers le guide 1. L'onde lumineuse émise par une barrette 13 est collimatée dans un plan P par une lentille cylindrique (non représentée). Le plan P est orthogonal à la face plane de contact S entre le guide 1 et le prisme 12 considéré. Incidemment, le guide 1 ayant une section transversale circulaire de centre C, le plan d'incidence P de l'onde de pompe 6 est légèrement décalé pas rapport audit centre C. De la sorte, la première réflexion de l'onde de pompe 6 dans le guide 1 ne revient pas dans un prisme 12.

La figure 7 représente schématiquement un mode de réalisation du montage de la figure 5 pour lequel un prisme 12 a été sélectionné en fonction de ses dimensions particulières. Ces dimensions sont indiquées sur la figure 7. L'angle de 20° du prisme 12 est suffisamment petit pour assurer un guidage sur tous les rayons issus de la barrette 13.

Enfin, pour un exemple de fabrication du guide on peut, si nécessaire, se référer à la description de Jean Ricard dans la demande de brevet FR-2321326 "procédé de fabrication en continu de monocristaux préformés", publiée le 18 Mars 1972.

## Revendications

1. Dispositif à guide optique (1) allongé et moyen de pompage, destiné à produire par émission stimulée un signal optique (4) sous l'effet d'un pompage optique par une onde de pompe (6), l'émission stimulée provenant d'éléments actifs du guide ayant été excités par l'onde de pompe, le dispositif comportant un guide mono-cristallin à coeur (3) dopé d'éléments actifs et à gaine (2) périphérique non dopée permettant le guidage et le confinement de l'onde de pompe dans l'ensemble de son volume, **caractérisé en ce que** le signal optique (4) produit dans le coeur est en propagation libre (8), les indices optiques du coeur et de la gaine du guide sont les plus proches possibles, la différence d'indice étant typiquement inférieure à $10^{-5}$ dans le cas d'un guide qui aurait une longueur typique de 10 cm et qui produirait une émission à une longueur d'onde de 1064 nm, et **en ce que** le guide a une longueur inférieure à la longueur de Rayleigh du signal optique dans le guide, la longueur de Rayleigh L étant donnée par : $L = \pi\omega^2/\lambda$ où $\lambda$ est la longueur d'onde du faisceau laser amplifié dans le guide mono-cristallin et $\omega$ est la taille du faisceau signal dans le plan du col du faisceau dans l'espace que constitue le milieu cristallin.

2. Dispositif selon la revendication 1, **caractérisé en ce que** le guide est droit, la plus grande dimension de la section étant comprise entre 0,4mm et 2mm, le coeur dopé ayant un diamètre compris entre 0,1mm et 1mm.

3. Dispositif selon la revendication 1ou 2, **caractérisé en ce que** l'onde de pompe (6) est produite par au moins une diode laser.

4. Dispositif selon la revendication 1, 2ou 3, **caractérisé en ce que** le pompage du guide est quasi-longitudinal par au moins une onde de pompe, l'onde de pompe (6) traversant un prisme (12) de couplage avant d'atteindre le guide par une face latérale.

5. Dispositif selon la revendication 1, 2ou 3, **caractérisé en ce que** le pompage du guide est longitudinal par au moins une onde de pompe, l'onde de pompe (6) traversant un miroir dichroïque (5) (5') avant d'atteindre le guide(1), par une de ses deux extrémités, le miroir dichroïque étant passant pour l'onde de pompe (6) et réfléchissant pour le signal (4).

6. Dispositif selon la revendication 5, **caractérisé en ce que** le guide est pompé par ses deux extrémités, au moins un des deux miroirs dichroïques étant incliné par rapport à l'axe optique défini par le guide pour extraction du signal.

7. Application du dispositif selon la revendication 4, 5 ou 6 à la réalisation d'un amplificateur optique impulsionnel dans lequel sont injectées des impulsions optiques par une première extrémité du guide opposée à sa seconde extrémité qui sert au pompage optique, les impulsions optiques à amplifier issues d'un laser déclenché ou d'un laser à modes verrouillés en phase faisant un double passage dans le guide, un miroir réfléchissant à la longueur d'onde des impulsions et transparent à la longueur d'onde de pompe étant placé à la seconde l'extrémité et un isolateur/extracteur étant disposé à la première extrémité afin de faire suivre un chemin optique différent au signal de sortie par rapport au signal d'entrée.

8. Application du dispositif selon la revendication 4, 5 ou 6 à la réalisation d'un oscillateur laser comportant un guide cristallin insérée dans une cavité optique linéaire ou en anneau et comportant un miroir de sortie partiellement réfléchissant pour le signal, distinct du/des miroirs dichroïques, et permettant d'extraire hors de l'oscillateur laser une partie du signal produit.

9. Application selon la revendication 8, **caractérisée en ce que** la cavité est linéaire et que le guide est pompé (6) (6') à ses deux extrémités, un premier (5) des deux miroirs dichroïques étant perpendiculaire à l'axe optique défini par le guide et le second étant incliné (5') par rapport à l'axe optique défini par le guide pour renvoi du signal vers le miroir de sortie (11).

## Claims

1. A device with an elongated optical guide (1) and a pumping means, for producing by stimulated emission an optical signal (4) under the effect of an optical pumping by a pump wave (6), the stimulated emission coming from active elements of the guide that have been excited by the pump wave, the device comprising a single-crystal guide having a core (3) doped with active elements and a non-doped peripheral cladding (2) enabling the pump wave to be guided and confined in its entire volume, **characterized in that** the optical signal (4) produced in the core is freely propagated (8), wherein the optical indices of the guide core and cladding are the closest possible, the index difference being typically lower than $10^{-5}$ in the case of a guide which would have a typical length of 10 cm and would produce an emission with a wavelength of 1064 nm, and **in that** the guide has a length lower than the Rayleigh length of the optical signal in the guide, the Rayleigh length L being given by : $L = \pi\omega^2/\lambda$, where $\lambda$ is the wavelength of the laser beam amplified in the single-crystal guide and $\omega$ is the size of the signal beam in the plane of the beam neck in the space formed by the crystal medium.

2. The device according to claim 1, **characterized in that** the guide is straight, the longer dimension of the cross-section being comprised between 0.4 mm and 2 mm, the doped core having a diameter comprised between 0.1 mm and 1 mm.

3. The device according to claim 1 or 2, **characterized in that** the pump wave (6) is produced by at least one laser diode.

4. The device according to claim 1, 2 or 3, **characterized in that** the guide pumping is almost-longitudinal by at least one pump wave, the pump wave (6) passing through a coupling prism (12) before reaching the guide through a lateral face.

5. The device according to claim 1, 2 or 3, **characterized in that** the guide pumping is longitudinal by at least one pump wave, the pump wave (6) passing through a dichroic mirror (5) (5') before reaching the guide (1), though one of this two ends, wherein the dichroic mirror is transparent for the pump wave (6) and reflective for the signal (4).

6. The device according to claim 5, **characterized in that** the guide is pumped through its two ends, at least one of the two dichroic mirrors being tilted with respect to the optical axis defined by the guide for the signal extraction.

7. The application of the device according to claim 4, 5 or 6 to the making of a pulsed optical amplifier in which optical pulses are injected through a first end of the guide opposed to the second end thereof that serves for the optical pumping, wherein the optical pulses to be amplified, coming from a Q-switched laser or a phase-locked laser, pass twice in the guide, a mirror that is reflective to the wavelength of the pulses and transparent to the wavelength of the pump being placed at the second end and an isolator/extractor being placed at the first end so as to redirect the output signal along a different optical path relative to that of the input signal.

8. The application of the device according to claim 4, 5 or 6 to the making of a laser oscillator comprising a crystal guide inserted into a linear or annular optical cavity and comprising an output mirror that is partially reflective for the signal, separate from the dichroic mirror(s), and that allow a part of the signal produced to be extracted outside the laser oscillator.

9. The application according to claim 8, **characterized in that** the cavity is linear and the guide is pumped (6) (6') at its two ends, a first (5) of the two dichroic mirrors being perpendicular to the optical axis defined by the guide and the second being tilted (5') with respect to the optical axis defined by the guide for the redirection of the signal toward the output mirror (11).

**Patentansprüche**

1. Vorrichtung mit länglichem Lichtleiter (1) und Pumpmittel, die dazu gedacht ist, durch stimulierte Emission ein optisches Signal (4) unter Einwirkung eines optischen Pumpens durch eine Pumpwelle (6) zu erzeugen, wobei die stimulierte Emission aus aktiven Elementen des Leiters stammt, die durch die Pumpwelle erregt wurden, wobei die Vorrichtung einen monokristallinen Leiter mit einem Kern (3), der mit aktiven Elemente dotiert ist, und mit einem umgebenden nicht dotierten Mantel (2), der das Leiten und das Einschließen der Pumpwelle in seinem gesamten Volumen ermöglicht, umfasst, **dadurch gekennzeichnet, dass** das optische Signal (4), das in dem Kern erzeugt wird, sich in freier Ausbreitung (8) befindet, wobei die optischen Brechzahlen des Kerns und des Mantels des Leiters möglichst nahe liegen, wobei der Brechzahlunterschied im Falle eines Leiters, der eine typische Länge von 10 cm hätte und der eine Emission auf einer Wellenlänge von 1064 nm erzeugen würde, typischerweise kleiner als $10^{-5}$ ist, und dass der Leiter eine Länge aufweist, die geringer ist als die Rayleigh-Länge des optischen Signals in dem Leiter, wobei die Rayleigh-Länge L gegeben ist durch: $L = \pi\omega^2/\lambda$, wobei $\lambda$ die Wellenlänge des Laserstrahls ist, der in dem monokristallinen Leiter verstärkt wird, und $\omega$ die Größe des Signalstrahls in der Taillenebene des Strahls in dem Raum, den das kristalline Medium bildet, ist.

2. Vorrichtung nach Anspruch 1, **dadurch gekennzeichnet, dass** der Leiter gerade ist, wobei die größte Dimension seines Querschnitts zwischen 0,4 mm und 2 mm liegt, wobei der dotierte Kern einen Durchmesser zwischen 0,1 mm und 1 mm aufweist.

**3.** Vorrichtung nach Anspruch 1 oder 2, **dadurch gekennzeichnet, dass** die Pumpwelle (6) von mindestens einer Laserdiode erzeugt wird.

**4.** Vorrichtung nach Anspruch 1, 2 oder 3, **dadurch gekennzeichnet, dass** das Pumpen des Leiters quasilängsgerichtet durch mindestens eine Pumpwelle erfolgt, wobei die Pumpwelle (6) durch ein Koppelprisma (12) geht, ehe sie den Leiter durch eine Seitenfläche erreicht.

**5.** Vorrichtung nach Anspruch 1, 2 oder 3, **dadurch gekennzeichnet, dass** das Pumpen des Leiters längsgerichtet durch mindestens eine Pumpwelle erfolgt, wobei die Pumpwelle (6) durch einen dichroitischen Spiegel (5) (5') geht, ehe sie den Leiter (1) über eines seiner beiden Enden erreicht, wobei der dichroitische Spiegel für die Pumpwelle (6) durchlässig und für das Signal (4) reflektierend ist.

**6.** Vorrichtung nach Anspruch 5, **dadurch gekennzeichnet, dass** der Leiter über seine beiden Enden gepumpt wird, wobei mindestens einer der beiden dichroitischen Spiegel im Verhältnis zu der durch den Leiter definierten optischen Achse für die Signalextraktion geneigt ist.

**7.** Anwendung der Vorrichtung nach Anspruch 4, 5 oder 6 auf die Herstellung eines optischen Impulsverstärkers, in den optische Impulse über ein erstes Ende des Leiters, das dem zweiten Ende desselben entgegengesetzt ist, das zum optischen Pumpen dient, eingekoppelt werden, wobei die zu verstärkenden optischen Impulse, die aus einem Q-Switch-Laser oder aus einem modengekoppelten Laser stammen, zweimal durch den Leiter gehen, wobei ein Spiegel, der auf der Wellenlänge der Impulse reflektierend und auf der Pumpwellenlänge transparent ist, an dem zweiten Ende angeordnet ist, und ein Isolator/Extraktor an dem ersten Ende angeordnet ist, damit das optische Signal im Verhältnis zum Eingangssignal einen anderen Weg einschlägt.

**8.** Anwendung der Vorrichtung nach Anspruch 4, 5 oder 6 auf die Herstellung eines Laseroszillators, der einen kristallinen Leiter umfasst, der in einen linearen optischen Hohlraum oder in einen Ring eingefügt wird und einen Ausgangsspiegel umfasst, der für das Signal teilweise reflektierend ist und anders als der bzw. die dichroitischen Spiegel ist und es ermöglicht, einen Teil des erzeugten Signals aus dem Laseroszillator zu entnehmen.

**9.** Anwendung nach Anspruch 8, **dadurch gekennzeichnet, dass** der Hohlraum linear ist und dass der Leiter an seinen beiden Enden (6) (6') gepumpt wird, wobei ein erster (5) der beiden dichroitischen Spiegel zu der optischen Achse, die von dem Leiter definiert wird, rechtwinklig ist, und der zweite (5') im Verhältnis zu der optischen Achse, die von dem Leiter definiert wird, für die Rücksendung des Signals zum Ausgangsspiegel (11) geneigt ist.

Fig. 1

10 cm

Fig. 2

Laser impulsionnel
1 ns 40 kHz 1 W
(Dualchip, JDSU)

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2321326

**Littérature non-brevet citée dans la description**

- **J.Stone ; C. A Burrus.** Nd : Y2O3 single crystal fiber laser : Room-temperature cw operation at 1.07- and 1.35-$\mu$m wavelength. *Journal of Applied Phys.,* Avril 1978, vol. 49 (4
- **M.J.F. Digonnet ; C.J. Gaeta ; H.J. Shaw.** 1064- and 1,32-$\mu$m Nd : YAG Single Crystal Flber. *Journal of Lightwave Technology,* Avril 1986, vol. LT-4 (4
- **M.J.F. Digonnet ; C.J. Gaeta ; D. O'MEARA ; H.J. Shaw.** Clad Nd : YAG Fibers for Laser Applications. *Journal of Lightwave Technology,* Mai 1987, vol. LT-5 (5